# EUROPEAN PATENT SPECIFICATION

(11) **EP 2 226 734 B1**
(45) Date of publication and mention of the grant of the patent: **14.11.2018**
(21) Application number: 08867603.6
(22) Date of filing: 16.12.2008
(51) Int. Cl.: A41H 3/00, G06T 19/00, G06F 17/50, D04B 37/00

(54) **WEARING SIMULATION DEVICE AND SIMULATION METHOD FOR KNIT GARMENT, AND SIMULATION PROGRAM**
TRAGESIMULATIONSVORRICHTUNG UND SIMULATIONSVERFAHREN FÜR STRICKKLEIDUNG SOWIE SIMULATIONSPROGRAMM
DISPOSITIF DE SIMULATION DE PORTAGE ET PROCÉDÉ DE SIMULATION POUR VÊTEMENT TRICOTÉ, ET PROGRAMME DE SIMULATION

(30) Priority: 28.12.2007 JP 2007339786
(43) Date of publication of application: 08.09.2010
(73) Proprietor: SHIMA SEIKI MANUFACTURING, LTD., Wakayama 641-0003 (JP)
(72) Inventor: MORIMOTO, Shinji, Wakayama-shi, Wakayama 641-0003 (JP); NAKAMURA, Atsushi, Wakayama-shi, Wakayama 641-0003 (JP); NAKAMURA, Toshinori, Wakayama-shi, Wakayama 641-0003 (JP)
(74) Representative: Carstens, Dirk Wilhelm
(86) International application number: PCT/JP2008/072885
(87) International publication number: WO 2009/084428

(56) References cited:
- WO-A1-2005/082185
- US-A1- 2002 126 132
- FUNDA DURUPYNAR ET AL: "A Virtual Garment Design and Simulation System", INFORMATION VISUALIZATION, 2007. IV '07. 11TH INTERNATIONAL CONFERENCE, IEEE, PI, 1 July 2007 (2007-07-01), pages 862-870, XP031115775, ISBN: 978-0-7695-2900-4
- FONTANA M ET AL: "3D virtual apparel design for industrial applications", COMPUTER AIDED DESIGN, ELSEVIER PUBLISHERS BV., BARKING, GB, vol. 37, no. 6, 1 May 2005 (2005-05-01), pages 609-622, XP027649812, ISSN: 0010-4485 [retrieved on 2005-05-01]

## Description

The present invention relates to a wearing simulation for a knit garment, and more particularly, to a way of preventing a knit garment fitted to a human body model from remaining in an unnatural state.

The applicant had already studied the fitting of a virtual knit garment onto a human body model (Patent document 1: Japanese Patent Publication Laid-open No. 2005-240213). Herein, the inventors noticed that accurate simulation is difficult to achieve in knit garments having tubular rib parts, or turnbacks such as a neck, cuffs and the like. In a knit garment having a tubular rib part at the hem, for instance, the position of rib part at the hem does not move readily from the position at which it is placed early in the simulation. When the initial placement of the rib part deviates from a natural height, therefore, the rib part remains at that height and the plain knitted fabric above the rib part swells sideways in an unnatural manner, or becomes stretched vertically. In a knit garment provided with a double neck portion having a turnback, moreover, the outer portion that is turned back away from the human body model rises up to the chin of the latter, in an unnatural state.

Such unnatural wearing states often fail to be eliminated, no matter how long the simulation is continued. In many cases such unnatural wearing states do not occur provided that the initial placement of the neck portion and/or the tubular rib part onto the human body model is performed skillfully. Preferably, however, simulation results should not vary significantly as a function of the way in which initial placement is performed. The inventors
arrived at the present invention by looking into ways of achieving a natural simulation without imposing particular constraints on the initial procedure for the placement of knit garments having tubular rib parts and/or turnbacks.

Another prior art document is illustrated next. Patent document 2: Japanese Patent Publication Laid-open No. 2000-331039 proposes a wearing simulation of a garment comprising a fabric, wherein an initial simulation is performed for the garment in a basic shape, and auxiliary parts are supplemented thereafter. For instance, the wearing state of an outer garment having no pockets is simulated, and then a simulation is performed next by designating the shape and form of pockets, to allow simulating easily multiple pocket variations. Also, collar variations can be simulated quickly when the collar design is modified after the simulation. However, fabric is less stretchable than knitwear, and garments comprising fabric have a tendency to preserve naturally a definite shape, The problem in fabrics is to reproduce drape or the like, but persistence of a garment in an unnatural state is not a usual occurrence.

Funda Durupynar et al: "A Virtual Garment Design and Simulation System" Information Visualization, 2007, IV '07. 11th International Conference, IEEE, PI, 1 July 2007 (2007-07-01), pages 862-870 discloses a system which enables the three dimensional construction of a garment from its cloth panels, for which the underlying structure is a mass-spring model. The garment construction process is performed through automatic pattern generation, posterior correction, and seaming, Afterwards, it is possible to do fitting on virtual mannequins as if in a real life tailor's workshop. The system provides the users with the flexibility to design their own garment patterns and make changes on the garment even after the dressing of the model.

From Fontana M. et. al: "3D virtual apparel design for industrial applications" Computer Aided Desgin, Elsevier Publishers BV., Barking GB, vol. 37, no 6, 1 May 2005 (2005-05-1), pages 609-622, a system is known which accurately predict garment shapes by including material properties and external interactions through a particle-based cloth model embedded in constrained Newtonian dynamics with collision management, extended to complex-shaped assembled and finished garments. The model is incorporated within a 3D graphical environment, and includes operators monitoring the whole design process of apparel, e.g. panel sewing, button/dart insertion, multi-layered fabric composition, garment finishings etc.

The object of the present invention is to enable simulation of a natural wearing state, on a human body model, of knit garments that have tubular rib parts, turnbacks or the like.

This and other objects are solved by a wearing simulation device as set forth in claim

The object is also solved by a wearing simulation method defined in claim 2.

The present invention is a device that simulates a wearing state of a designed knit garment on a human body model, according to independent claim 1.

The present invention is also a method for simulating a wearing state of a designed knit garment on a human body model, according to independent claim 2.

Preferably, the high-friction part is a tubular highly-shrinkable part, and the weak contact part is a part turned back towards a side that is not in contact with the human body model. Examples of a tubular highly-shrinkable part include, for instance, tubular rib parts. Tubular rib parts tend characteristically to shrink on account of the rib structure, and undergo significant friction against, for instance, a human body model. Other examples of tubular highly-shrinkable parts include, for instance, tubular parts that use an elastic yarn. Tubular parts that use an elastic yarn material tend to shrink on account of the highly-shrinkable yarn. Tubular highly-shrinkable parts include also, for instance, tubular parts that are knitted to a smaller loop size than other parts. The natural size of the loops in such parts is small, and hence the part shrinks so as to revert to its natural state, from the stretched state, when the part is fitted to the human body model. High friction and high shrinkability denote herein higher friction with a human body model or the like and therefore, denote that they shrink highly by the friction with the human body or the like compared with plain knitted parts.

Preferably, the means for simulating the wearing state of the basic garment comprises means for detecting a highly-shrinkable tubular part such as a tubular rib part as well as a turnback line within the knit garment; and means for simulating the wearing state, on the human body model, of the basic garment that comprises a portion starting from a body portion in the knit garment up to a rib part or the turnback line, and the means for performing simulation again joins, to the basic garment, a part that is further away from the body portion than the rib part and the turnback line, and simulates again the wearing state on the human body model.

Simulation of tubular highly-shrinkable parts such as tubular rib parts is difficult since, due to the stretchability of the part, friction acts between the rib part or the like and the human body model, and the part is hard to displace from the position at which it is initially placed. If the highly-shrinkable part remains at the place at which it is initially placed, the surroundings of the part, such as plain knitted fabric, take on an unnatural shape. This problem, therefore, can be generalized to parts having significant friction with the human body model and that hamper simulation accordingly. Therefore, the rank of such parts in the simulation sequence is lowered, and the simulation is performed by removing those parts that hamper simulation. Tubular highly-shrinkable parts no longer hamper simulation when the removed part is joined then to an already-simulated part. This does away with, for instance, the constraint wherein simulation is difficult unless such parts are disposed at specific positions during initial placement.

Conceivable reasons on account of which turned back parts on the far side from the human body model are likely to take on an unnatural shape during simulation include the following. Upon deformation of a part on the inner side of the turnback, on the near side to the human body model, the part ahead of the turnback line is not displaced parallelly in the same direction; instead, it is the turnback line that is displaced. In the case of a double neck portion, for instance, it is the turnback line that drops, and not the outer neck portion, when the inner neck portion descends in the simulation. The simulation results are therefore unnatural. An accurate simulation can be achieved thus by lowering the wearing sequence rank of such portions, in the same way as in the case of a tubular rib part or the like. The difficulty of simulating parts ahead of turnbacks derives from the fact that such parts are not in direct contact with the human body model. This problem can be generalized to parts that are not in direct contact with the human body model.

In the present invention, highly-shrinkable tubular parts such as tubular rib parts, and parts ahead of turnbacks, among others, do not hamper the wearing simulation of a knit garment.
Fig. 1 is a diagram illustrating the hardware configuration of a simulation device in an embodiment;
Fig. 2 is a flowchart illustrating the first half of a simulation method in an embodiment;
Fig. 3 is a flowchart illustrating the second half of a simulation method in an embodiment;
Fig. 4 is a diagram illustrating a simulation program in an embodiment;
Fig. 5 is a diagram illustrating a simulation sequence in an embodiment;
Fig. 6 is a set of diagrams illustrating problems during simulation of a tubular rib part together with a plain knitted fabric, wherein (A) depicts an embodiment in which a garment is at an unnaturally high position due to friction between a rib part and a human body model, and (B) depicts an embodiment in which the garment is at an unnaturally low position due to rib part friction;
Fig. 7 is a set of diagrams illustrating problems during simulation of a part having a turnback, together with a plain knitted fabric, wherein (A) depicts initial placement, (B) depicts a state up to completion of joining of the part with a plain knitted fabric, and (C) depicts a state in which simulation of a stable wearing state is over;
Fig. 8 is a diagram illustrating a simulation sequence in a modification, wherein a tubular rib part is provided halfway in a body portion;
Fig. 9 is a diagram illustrating a simulation sequence in a modification, wherein a sleeve has a turnback;
Fig. 10 is a set of diagrams illustrating a simulation process for a knit garment that is provided with a neck portion having a turnback, wherein (A) depicts a state in which each part is initially placed, (B) depicts a state in which portions beyond the turnback line are deleted from the neck in (A), (C) depicts the results of simulation upon deletion of portions ahead of the turnback line, (D) depicts a state in which the parts deleted in (C) are appended, and (E) depicts the results of simulation from (D); and
Fig. 11 is a diagram illustrating results in a conventional embodiment in which the knit garment of Fig. 10 is simulated in block ahead of the turnback line of the neck.

2 simulation device
4 color monitor
6 manual input
8 disk drive
9 disk
10 network interface
12 color printer
15 program memory
16 file memory
17 image memory
18 knit design unit
19 data conversion unit
20 bus
22 detection unit
24 wearing sequence management unit
26 initial placement unit
28 joining unit
30 stable-state simulation unit
31 simulation program
32 detection instruction
34 wearing sequence management instruction
36 initial placement instruction
38 joining instruction
40 stable-state simulation instruction
50 knit garment
51 body portion
52 tubular rib part in hem
53, 54 sleeve
55, 56 tubular rib part of cuff
57 neck portion
58 turnback line
59 part ahead of turnback line
60 boundary line
80 knit garment
81 breast side plain knitted fabric
82 stomach side plain knitted fabric
83, 84 tubular rib part in arm hole
85 tubular rib part in neck
86 tubular rib part in body portion middle
90 knit garment
91 body portion
92, 93 sleeve
94, 95 turnback portion
96 front portion
97 rear portion
98 turnback line
100 knit garment
102 collar

Optimal embodiments for carrying out the invention are explained below.

### Embodiments

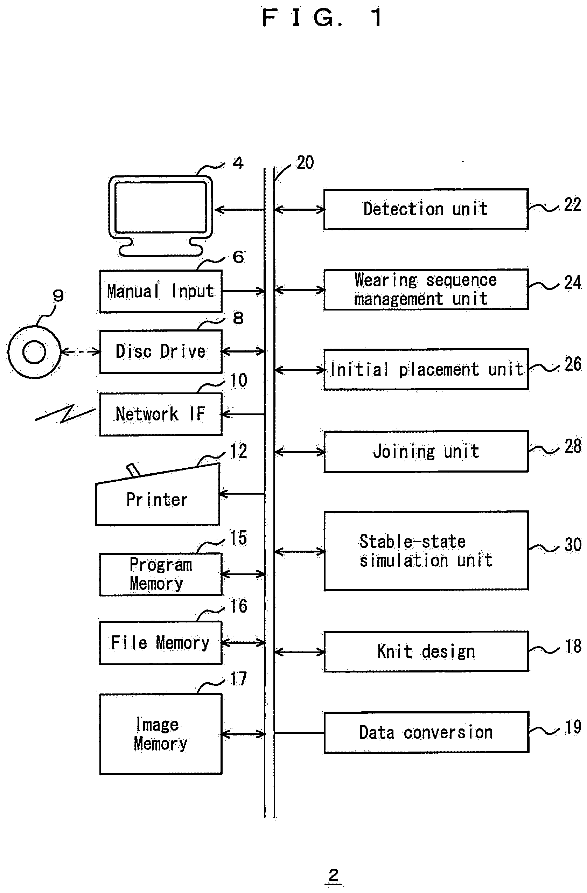

Figs. 1 to 10 illustrate embodiments of wearing simulation. A simulation device 2 in Fig. 1 simulates the wearing state of a knit garment in a virtual human body model. The reference numeral 4 denotes a color monitor for displaying simulation results and the like, and the reference numeral 6 denotes a manual input, in the form of a keyboard, a stylus, a joystick, a trackball or the like. The reference numeral 8 denotes a disk drive, which carries out input/output of, for instance data and a simulation program, with a disk 9. The reference numeral 10 denotes a network interface, for input and output of, for instance, data and a simulation program, via a LAN, Internet or the like. A color printer 12 outputs the simulation results in the form of images or the like.

The reference numeral 15 denotes a program memory that stores a simulation program. The reference numeral 16 denotes a file memory that stores data in the form of files. An image memory 17 stores image data. The reference numeral 18 denotes a knit design unit that designs a knit garment on the basis of inputs from the manual input 6, the disk drive 8 or the like. A data conversion unit 19 converts the obtained design data into knitting data that enables knitting by a knitting machine, for instance a flat knitting machine. The reference numeral 20 denotes a bus.

The various units that execute the simulation are described next. On the basis of, for instance, knit design data and/or knitting data, a detection unit 22 detects a highly-shrinkable tubular part, for instance, a tubular rib part, a tubular part that uses elastic yarn, or a tubular part knitted to a smaller loop size than other parts. Tubular rib parts are found, for instance, at the hem of the body portion, at sleeve cuffs, and around the neck hole. Tubular parts using elastic yarn are often found at specific sites, such as hems, cuffs, glove wrists, sock ankles and the like. Tubular parts having a smaller loop size than other parts can often be detected on the basis of, for instance, stitch density data in the knitting data. The detection unit 22 detects also turnbacks in the knit garment. Turnbacks are present, for instance, in collars, cuffs and the like. Detecting turnback on the basis of knitting data is difficult, and hence turnbacks are detected, for instance, on the basis of design data of the knit garment. Instead of being automatically detected by the detection unit 22, portions like turnbacks and highly-shrinkable tubular part such as tubular rib parts may also be designated via the manual input 6, on the color monitor 4. In case that sewing data or the like is appended to design data, highly-shrinkable tubular parts and turnbacks can also be detected on the basis of the sewing data.

To simulate the wearing state of the virtual knit garment, a wearing sequence management unit 24 manages the sequence in which the various parts are fitted. Specifically, a basic garment, obtained by removing the parts detected by the detection unit 22 from the kit garment, is fitted initially onto the human body model. After simulation of the wearing state of the basic garment, the parts detected by the detection unit 22 are joined to the basic garment, and the wearing state is simulated again. The wearing sequence is managed so that simulation is executed in the above sequence. An initial placement unit 26 performs initial placement of the various parts of the knit garment on the human body model. Initial placement may also be designated via, for instance, the manual input 6. Preferably, however, the specific parts of the garment to which the various parts correspond is discriminated on the basis of design data or knitting data. For instance, it is discriminated whether the various parts correspond to a collar, sleeve, body portion or the like, whereupon the parts are placed at positions on the human body model that correspond to the type of the respective part. A joining unit 28 joins to each other the various parts thus initially placed. A stable-state simulation unit 30 simulates a stable wearing state on the basis of the forces that act on the various parts of the joined knit garment.

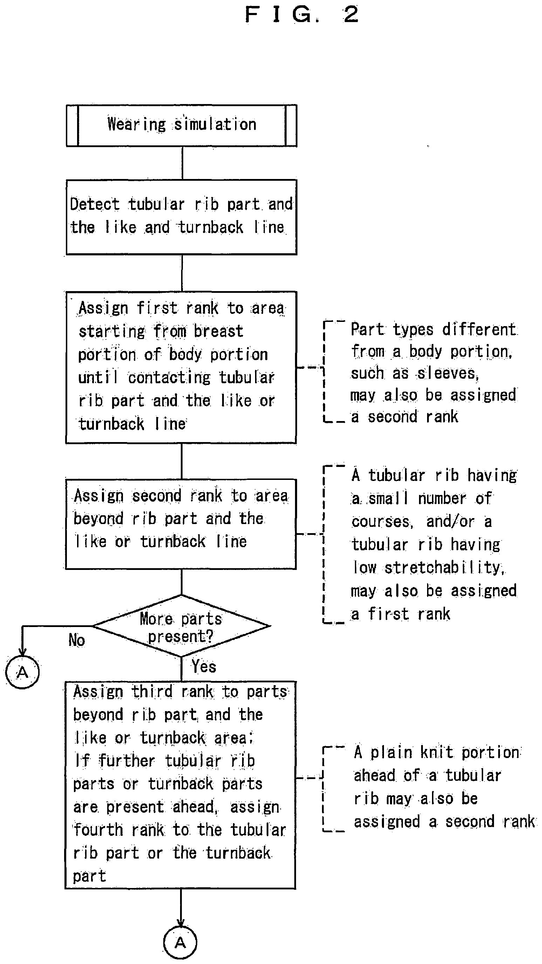

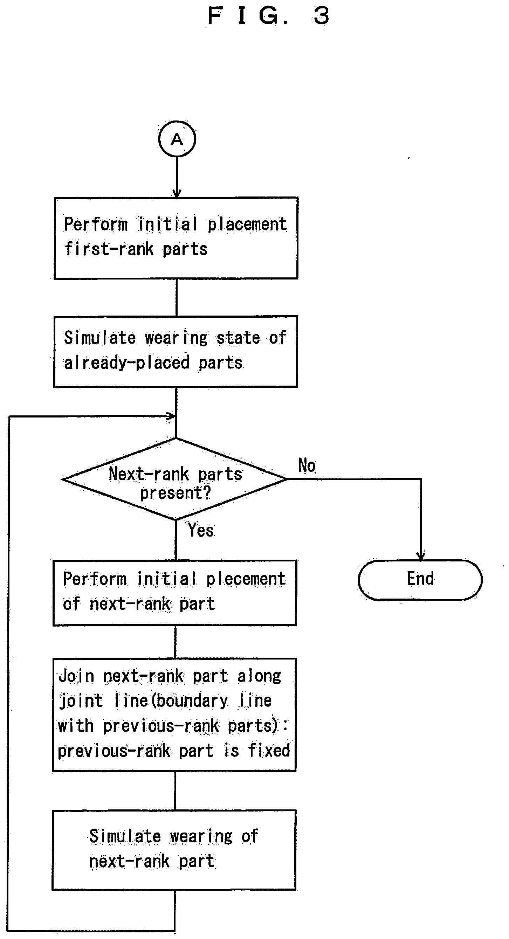

Fig. 2 and Fig. 3 illustrate a wearing simulation algorithm. The design data and the knitting data of the knit garment are created prior to the simulation. Tubular highly-shrinkable parts are detected on the basis of the design data and/or knitting data of the knit garment, and turnback lines are detected on the basis of design data. Tubular highly-shrinkable parts and turnback lines may also be designated manually, or may be designated on the basis of, for instance, sewing data that is appended to the design data of the knit garment. A wearing rank is assigned to the various portions of the knit garment. A first rank is assigned to tubular highly-shrinkable parts, for instance tubular rib parts, or to parts that are in contact with a turnback line, starting from a portion of plain knitted fabric of the body portion, for instance from the breast portion of the front body portion, or starting from a site between the top and the center of the rear body portion. Those tubular rib parts having a small course number, or a shrinkability that does not vary significantly from that of plain knitted fabric, may also be included in the first rank. In a specific example, sleeves and the body portion have the same rank in case that no tubular rib part or the like is present at the boundary between the sleeves and the body portion. Alternatively, however, the first rank may be assigned to the body portion, and a second rank to the sleeves.

A second rank is assigned to parts beyond a turnback line and a rib part. A third rank is assigned to such parts that are further removed from the top to center of the breast or the back of the body portion, beyond and a turnback line or a tubular rib part or the like. For instance, if plain knitted fabric is ahead of a tubular rib part, the tubular rib part is assigned to the second rank, and the plain knitted fabric is assigned to the third rank or to the second rank, like the tubular rib part. If yet another tubular rib part or turnback line is present further ahead, then any part ahead of that tubular rib part or turnback line is assigned a fourth rank.

Moving on from the link point A to Fig. 3, the parts of the initial rank, i.e. the first rank, are initially placed on the human body model. In case that the body portions, sleeves or the like are tubular parts, these parts are placed so as to wrap around the torso, arms or the like of the human body model, and the parts are joined to each other. A wearing state simulation is then performed on the basic garment thus obtained. In the simulation there is simulated the way in which the garment deforms, taking into account, for instance, the weight acting on the knit garment, friction against the human body model and the elastic forces generated on account of garment deformation. The elements in the simulation may be the stitches of the knit garment, but preferably there is used a mesh of units that are larger than stitches. For instance, the way in which the knit garment deforms is simulated by providing mesh intersections every about 10 to 100 stitches, such that each intersection represents about 10 to 100 stitches. The stitches are then disposed in 3D space around the human body model, on the basis of the obtained mesh intersection layout.

The presence or absence of parts of a next rank is checked upon simulation of the wearing state of the basic garment, i.e. of the knit garment made up of parts of initial rank. If there are parts of next rank, these parts are subjected to initial placement. The initial placement of the plurality of parts that make up the garment may be carried out over divisional periods that correspond to, for instance, the wearing ranks, or may be carried out collectively. The position of the already-simulated parts is fixed, and initially placed parts of a next rank are joined thereto. As a result, the shape of the basic garment does not change even when second rank parts are joined. The wearing state of the second rank parts is then simulated. In this case, the simulation time is shortened through fixing of the shape of the basic garment that is already fitted. In order to increase simulation precision, however, the basic garment may be caused to deform, for instance, around joints, at the same time that the stable state of the second rank parts is simulated. To join and simulate all parts, thus, the wearing state is simulated starting from high-ranking parts and moving then onto lower-ranking parts. The obtained simulation results are outputted to a color monitor, a color printer or the like.

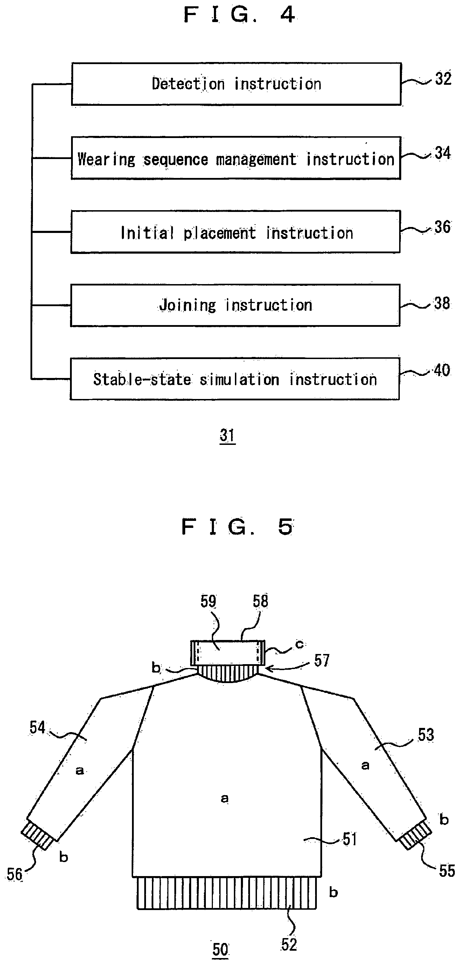

Fig. 4 illustrates a simulation program 31. The simulation program 31 is provided stored in the disk 9 or the like, or in the form of an Internet carrier wave. The reference numeral 32 denotes a detection instruction, for detecting a highly-shrinkable tubular part and a turnback line, in accordance with the same processing as that of the detection unit 22. The reference numeral 34 denotes a wearing sequence management instruction, for managing the wearing sequence of each part. An initial placement instruction 36 elicits initial placement of the parts onto the human body model, and a joining instruction 38 elicits joining of the parts to one another. Herein, additional parts are joined in such a manner that the position of the already-simulated garment does not change for parts of rank beyond that of the basic garment. A stable-state simulation instruction 40 elicits simulation of a stable wearing state of the already-joined parts. The simulation is executed thus by repeatedly joining parts, simulating a stable wearing state, joining parts of a next rank, and simulating a stable wearing state, in accordance with a wearing sequence that starts from the first rank.

Figs. 5 to 10 illustrate examples of wearing simulations in the embodiment. A knit garment 50 of Fig. 5 comprises both a tubular rib part and a turnback portion. The reference numeral 51 denotes a body portion, comprising for instance a plain knitted fabric. The reference numeral 52 denotes a tubular rib part of a hem. The reference numerals 53, 54 denote sleeves, and the reference numerals 55, 56 denote tubular rib parts of cuffs. A neck portion 57 has a turnback line 58. The reference numeral 59 denotes a part ahead of the turnback line. The reference numerals a, b, c in the figure indicate the wearing sequence. The body portion 51 and both sleeves 53, 54 are fitted first, followed by the tubular rib parts 52, 55, 56, 57. The part 59 ahead of the turnback line 58 is fitted last. In Figs. 5 to 10, rank a is a first rank, rank b is a second rank, and rank c is a third rank.

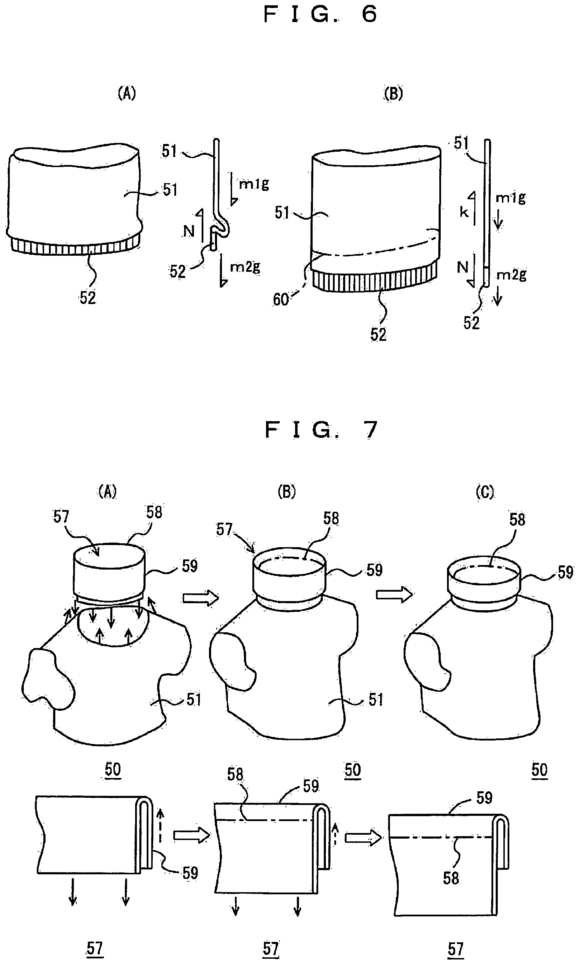

The reason for postponing the wearing sequence for the tubular rib parts is illustrated in Fig. 6. Performing simulation in block with the rib part 52 of the hem attached to the body portion 51 results in the situation illustrated in Fig. 6(A). The tubular rib part 52 has greater stretchability than the plain knitted fabric, and hence tends to hug the human body model, so that significant friction develops between the human body model and the tubular rib part 52. The forces that act on the garment are depicted on the right of (A) as a weight m1g acting on the body portion 51and a weight m2g acting on the rib part 52. A frictional force N with the human body acts on the rib part 52. Due to the frictional force N, the rib part 52 does not descend. As a result, the body portion 51 above the rib part 52 swells into an unnatural state.

Fig. 6(B) illustrates a state in which the body portion 51 is unnaturally stretched down on account of the rib part 52. A boundary line 60 indicates the boundary position between the rib fabric and the plain knitted fabric in a normal state. In (B), the body portion 51 is stretched down below the boundary line 60. As shown on the right of (B), a weight m1g acts on the body portion 51, and a weight m2g acts on the rib part 52. The body portion 51, is stretched down, and hence an upward elastic force k acts thereon. The frictional force N, however, acts downwards, since the rib part 52 hugs the human body model. As a result, the rib part 52 may fail to move upwards, and the body portion 51 may remain stably in an unnaturally stretched state.

The portions of plain knitted fabric experience a smaller frictional force with the human body model, and hence portions of plain knitted fabric adopt a natural state when the plain knitted fabric is simulated separately from, for instance, tubular rib parts. Tubular rib parts and so forth take up as well a natural position when simulation is performed by adding the tubular rib parts and the like once the body portion is in a natural state. The wearing state of tubular rib parts or the like may be simulated simultaneously with that of plain knitted fabric, starting from the center of the body portion, if the tubular rib part has a small number of curses and/or the tubular rib part has low shrinkability.

Turnbacks are explained with reference to Fig. 7. (A) illustrates the process of joining a neck portion 57 to the body portion 51. The neck portion 57 is drawn towards the body portion 51, and at the same time the body portion 51 is drawn towards the neck portion 57. The force that accompanies joining acts at the joint line of the neck portion 57 to the body portion 51. The neck portion 57 is not drawn towards the body portion 51 while the entire shape of the former is preserved. Instead, the portion within the neck portion 57 on the inward side of the double neck, on the rear side of the part 59, is drawn towards the body portion 51, to yield the state in (B). The stitches or mesh around the joint often end up stretched by the stage where joining is complete. These portions are therefore shrunk during the simulation process. The joint of the neck portion 57 on the side of the body portion 51 moves further downwards in the figure as the knitted fabric shrinks around the joint between the body portion 51 and the neck portion 57, to yield the state in (C). In the above processes, the initial turnback line 58 moves towards the inside of the double neck, and the height of the turnback changes accordingly. By contrast, the height of the lower end of the outer neck portion remains virtually unchanged.

In the above processes, the part 59 ahead of the turnback line 58 takes on a shape that is different from the original design. Therefore, the simulation sequence is modified and, taking the turnback line 58 as a boundary, simulation is performed beginning with a part inward of the neck and closer to the body portion than the turnback line 58. Natural simulation can be achieved by joining next, to the turnback line 58, the part 59 that is ahead of the turnback line.

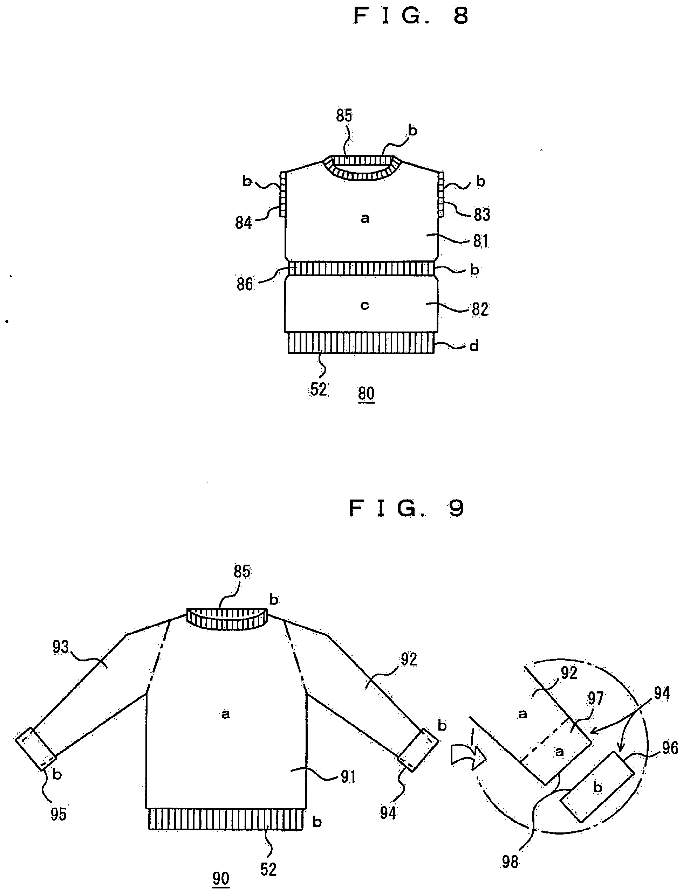

The knit garment 80 of Fig. 8 is an example of a tubular rib part 86 in the middle of the body portion. The reference numeral 81 denotes a breast side plain knitted fabric, the reference numeral 82 denotes a stomach side plain knitted fabric, the reference numerals 83, 84 denote tubular rib parts in arm holes, and the reference numeral 85 denotes a tubular rib part in the neck. In the simulation of the garment 80, the breast side plain knitted fabric 81 is simulated first, followed by simulation of the tubular rib parts 83, 84, 85, 86. That is, the above parts are virtually joined to the already-simulated plain knitted fabric 81, and then the stable state of the newly joined parts 83 to 86 is simulated. The plain knitted fabric 82 is then virtually joined to the lower side of the rib part 86, and the stable state is simulated. Lastly, the rib part 52 is joined to the hem and is simulated. The simulation sequence comprises thus four stages, namely a→b→c→d, although parts 86 and 82 may also be simulated simultaneously.

A knit garment 90 of Fig. 9 is an example in which a cuff has turnback portions 94, 95. The reference numeral 91 denotes a body portion, the reference numerals 92, 93 denote sleeves, the reference numeral 85 denotes a tubular rib part of a neck, and the reference numeral 52 denotes a tubular rib part of a hem. The turnback portion 94 has a front portion 96 and a rear portion 97, with a turnback line 98 in between, as depicted on the right of Fig. 9. The sleeve 92 and the rear portion 97 are simulated simultaneously, provided that the turnback portion 94 is not a tubular rib part or the like. Lastly, the front portion 96 is joined to the rear portion 97 at the turnback line 98 and is simulated. The same procedure applies to the turnback portion 95. In case that the turnback portions 94, 95 are tubular rib parts, the rear portion 97 is simulated after simulation of the sleeves 92, 93, and the front portion 96 is simulated thereafter.

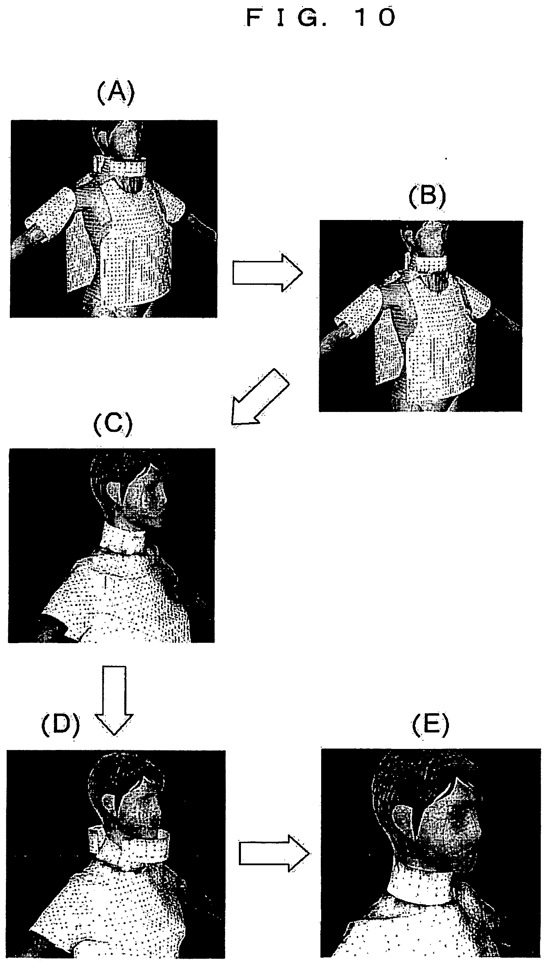

Fig. 10 illustrates a wearing simulation of a knit garment having a turnback. In (A), the various parts are initially placed on the human body model. In (B), the portion ahead of the turnback line, i.e. the part on the front side away from the body portion, is removed from the double neck portion having the turnback. The wearing state is simulated next in (C), and in (D) there is placed the portion ahead of the turnback line that had been removed. The portion ahead of the turnback line is joined then in such a manner that the already fitted knit garment is not deformed. The result is achieved lastly in (E), where the portion ahead of the turnback line is simulated.

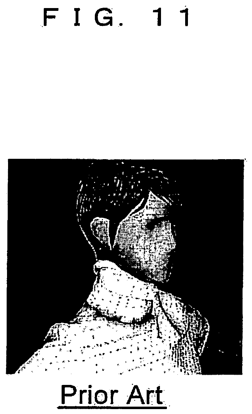

Fig. 11 illustrates simulation results obtained for identical design data, but processing the portion ahead of the turnback line collectively with other portions. In Fig. 11 the turnback portion stands at an unnaturally high position. The reason for this is that during the process of joining the neck portion, having a turnback, to the body portion, the inner side of the turnback is pulled downwards while the outer side of the turnback remains at a high position. In the simulation after joining, the inner side of the turnback is further pulled downwards, but the outer side of the turnback fails to descend, and remains at an unnaturally high position.

The following effects are elicited in the above embodiment.
(1) It becomes possible to place, at natural positions, tubular highly-shrinkable parts such as tubular rib parts or the like that hamper simulation by remaining at unnatural positions due to significant friction against a human body model.
(2) It becomes possible to simulate, in a correct state, such portions ahead of a turnback line as are likely to yield unnatural shapes in a simulation.
(3) No particular constraints are imposed on the initial placement of the various parts.

The pose of the human body model may be modified during the simulation. In Fig. 10, for instance, the arms of the model are slightly raised. Raised arms facilitate initial placement, in that collisions between the human body model and parts such as the sleeves or the body portion are avoided. The body portion is pulled up slightly towards the shoulders when simulation is performed next with raised arms. As illustrated in Fig. 10, a more realistic simulation can be achieved by not keeping the pose of the model constant, but by modifying the pose, for instance through lowering of the arms, once the garment approaches a stable state in the simulation. The plain knitted fabric of the body portion swells then in a natural state at the upper portion of the rib part of the hem. The knit garment may also be fitted onto another piece of apparel that is worn by the human body model. In this case, friction against the human body model denotes friction against the apparel that is worn under the knit garment.

A process such as the one in the above embodiment is not necessary for a garment that is not a knit garment, i.e. in case of a garment that comprises an ordinary fabric, i.e. a woven fabric. The various parts of a knit garment deform readily, and portions that are subjected to significant friction against the human body model do not move readily to their normal position. Ordinary fabrics, by contrast, do not have this problem. In ordinary fabrics, the portions ahead of a turnback line move readily simultaneously with the portions lagging the turnback line. As a result, portions ahead of a turnback line can be readily simulated as stabilized in a natural position.

## Claims

1. A wearing simulation device (2) for simulating a wearing state of a designed virtual knit garment (50, 80, 90, 100), the wearing state being the way in which the garment deforms on a virtual human body model, the device comprising:
a detection unit (22) that detects a tubular highly-shrinkable part (52,55,56,83,84,85,86) and a turnback line (58,98) within the knit garment (50,80,90,100), wherein the tubular highly-shrinkable part (52,55,56,83,84,85,86) is a tubular rib part, a tubular part that uses elastic yarn, or a tubular part knitted to a smaller loop size than other part;
a wearing sequence management unit (24) that manages a wearing sequence in which parts of the knit garment are placed on the human body model and are simulated;
an initial placement unit (26) that performs on the human body model initial placement of a basic garment which is obtained by removing the parts detected by the detection unit (22) from the knit garment (50, 80, 90, 100), and comprises parts of the knit garment from a body portion (51) until contacting the tubular highly-shrinkable part (52,55,56,83,84,85,86) or the turnback line (58,98);
a stable-state simulation unit (30) that simulates a stable wearing state of the basic garment, the basic garment resulting from removing virtually from the knit garment (50, 80, 90, 100) the highly-shrinkable part, on the basis of the forces that act on the basic garment;
the initial placement unit (26) performs on the human body model subsequent placement of a part that is further away from the body part portion (51) than the tubular highly-shrinkable part (52,55,56,83,84,85,86) or the turnback line (58,98);
a joining unit (28) that joins the subsequently placed part to the already-simulated parts so that the already-simulated parts are fixed; and
the stable-state simulation unit (30) simulates the wearing state of the parts of the knit garment that are joined.

2. A wearing simulation method for knit garments, being a computer-implemented method for simulating a wearing state of a designed virtual knit garment (50, 80, 90, 100), the wearing state being the way in which the garment deforms on a virtual human body model, comprising the steps of:
detecting a tubular highly-shrinkable part (52,55,56,83,84,85,86) and a turnback line (58,98) within the knit garment (50,80,90,100), wherein the tubular highly-shrinkable part (52,55,56,83,84,85,86) is a tubular rib part, a tubular part that uses elastic yarn, or a tubular part knitted to a smaller loop size than other part;
first placing on the human body model a basic garment which is obtained by removing the detected parts from the knit garment (50, 80, 90, 100) and which comprises parts of the knit garment from a body portion (51) until contacting the tubular highly-shrinkable part (52,55,56,83,84,85,86) or the turnback line (58,98);
simulating a stable wearing state of the basic garment, the basic garment, resulting from removing virtually from the knit garment (50, 80, 90, 100) the highly shrinkable part, on the basis of the forces that act on the basic garment;
subsequently placing on the human body model a part that is further away from the body part portion (51) than the tubular highly-shrinkable part (52,55,56,83,84,85,86) or the turnback line (58,98)
joining the subsequently placed part to the already-simulated parts so that the already-simulated parts are fixed;
simulating the wearing state of the parts of the knit garment that are joined.

## Patentansprüche

1. Tragesimulationsvorrichtung (2) zum Simulieren eines Tragezustands eines designierten virtuellen Strickkleidungsstücks (50, 80, 90, 100), wobei der Tragezustand die Art und Weise ist, in welcher sich das Kleidungsstück an einem virtuellen Menschenkörpermodell verformt, wobei die Vorrichtung umfasst:
eine Erfassungseinheit (22), die einen schlauchförmigen, stark schrumpfbaren Teil (52, 55, 56, 83, 84, 85, 86) und eine Umschlaglinie (58, 98) in dem Strickkleidungsstück (50, 80, 90, 100) erfasst, wobei der schlauchförmige, stark schrumpfbare Teil (52, 55, 56, 83, 84, 85, 86) ein schlauchförmiger Rippenteil, ein schlauchförmiger Teil mit einem darin verwendeten elastischen Faden oder ein zu einer kleineren Schlaufengröße als ein anderer Teil gestrickter schlauchförmiger Teil ist,
eine Tragesequenz-Verwaltungseinheit (24), die eine Tragesequenz verwaltet, in der Teile des Strickkleidungsstücks an dem Menschenkörpermodell platziert und simuliert werden,
eine Anfängliche-Platzierung-Einheit (26), die an dem Menschenkörpermodell eine anfängliche Platzierung eines Basiskleidungsstücks durchführt, das durch das Entfernen der durch die Erfassungseinheit (22) erfassten Teile von dem Strickkleidungsstück (50, 80, 90, 100) erhalten wird, und Teile des Strickkleidungsstücks von einem Körperteil (51) bis zu einem Kontakt des schlauchförmigen, stark schrumpfbaren Teils (52, 55, 56, 83, 84, 85, 86) oder der Umschlaglinie (58, 98) umfasst,
eine Stabilzustand-Simulationseinheit (30), die einen stabilen Tragezustand des Basiskleidungsstücks simuliert, wobei das Basiskleidungsstück aus dem virtuellen Entfernen des stark schrumpfbaren Teils von dem Strickkleidungsstück (50, 80, 90, 100) resultiert, basierend auf den auf das Basiskleidungsstück wirkenden Kräften,
wobei die Anfängliche-Platzierungseinheit (26) an dem Menschenkörpermodell eine anschließende Platzierung eines Teils durchführt, der weiter weg von dem Körperteil (51) ist als der schlauchförmige, stark schrumpfbare Teil (52, 55, 56, 83, 84, 85, 86) oder die Umschlaglinie (58, 98),
eine Verbindungseinheit (28), die den anschließend platzierten Teil mit den bereits simulierten Teilen verbindet, sodass die bereits simulierten Teile fixiert werden, und
wobei die Stabilzustand-Simulationseinheit (30) den Tragezustand der verbundenen Teile des Strickkleidungsstücks simuliert.

2. Tragesimulationsverfahren für Strickkleidungsstücke, das ein computerimplementiertes Verfahren für das Simulieren eines Tragezustands eines designierten virtuellen Strickkleidungsstücks (50, 80, 90, 100) ist, wobei der Tragezustand die Art und Weise ist, in der sich das Kleidungsstück an einem virtuellen Menschenkörpermodell verformt, wobei das Verfahren die folgenden Schritte umfasst:
Erfassen eines schlauchförmigen, stark schrumpfbaren Teils (52, 55, 56, 83, 84, 85, 86) und einer Umschlaglinie (58, 98) in dem Strickkleidungsstück (50, 80, 90, 100), wobei der schlauchförmige, stark schrumpfbare Teil (52, 55, 56, 83, 84, 85, 86) ein schlauchförmiger Rippenteil, ein schlauchförmiger Teil mit einem darin verwendeten elastischen Faden oder ein zu einer kleineren Schlaufengröße als ein anderer Teil gestrickter schlauchförmiger Teil ist,
erstes Platzieren an dem Menschenkörpermodell eines Basiskleidungsstücks, das durch das Entfernen der erfassten Teile von dem Strickkleidungsstück (50, 80, 90, 100) erhalten wird und Teile des Strickkleidungsstücks von einem Körperteil (51) bis zu einem Kontakt des schlauchförmigen, stark schrumpfbaren Teils (52, 55, 56, 83, 84, 85, 86) oder der Umschlaglinie (58, 98) umfasst,
Simulieren eines stabilen Tragezustands des Basiskleidungsstücks, wobei das Basiskleidungsstück aus dem virtuellen Entfernen des stark schrumpfbaren Teils von dem Strickkleidungsstück (50, 80, 90, 100) resultiert, basierend auf den auf das Basiskleidungsstück wirkenden Kräften,
anschließendes Platzieren an dem Menschenkörpermodell eines Teils, der weiter weg von dem Körperteil (51) ist als der schlauchförmige, stark schrumpfbare Teil (52, 55, 56, 83, 84, 85, 86) oder die Umschlaglinie (58, 98),
Verbinden des anschließend platzierten Teils mit den bereits simulierten Teilen, sodass die bereits simulierten Teile fixiert werden, und
Simulieren des Tragezustands der verbundenen Teile des Strickkleidungsstücks.

## Revendications

1. Dispositif de simulation de port (2), pour simuler un état de port d'un vêtement tricoté virtuel désigné (50, 80, 90, 100), l'état de port étant la manière avec laquelle le vêtement se déforme sur un modèle de corps humain virtuel, le dispositif comprenant :
un module de détection (22) qui détecte une partie tubulaire fortement rétractable (52, 55, 56, 83, 84, 85, 86) et une ligne de revers (58, 98) dans le vêtement tricoté (50, 80, 90, 100), la partie tubulaire fortement rétractable (52, 55, 56, 83, 84, 85, 86) étant une partie de côtes tubulaire, une partie tubulaire qui utilise du fil élastique, ou une partie tubulaire tricotée avec une taille de boucle plus petite qu'une autre partie ;
un module de gestion de séquence de port (24) qui gère une séquence de port dans laquelle des parties du vêtement tricoté sont placées sur le modèle de corps humain et sont simulées ;
un module de placement initial (26) qui réalise sur le modèle de corps humain un placement initial d'un vêtement de base qui est obtenu en retirant les parties détectées par le module de détection (22) du vêtement tricoté (50, 80, 90, 100), et comprend des parties du vêtement tricoté allant d'une portion de corps (51) jusqu'à un contact avec la partie tubulaire fortement rétractable (52, 55, 56, 83, 84, 85, 86) ou la ligne de revers (58, 98) ;
un module de simulation d'état stable (30) qui simule un état stable de port du vêtement de base, le vêtement de base résultant d'un retrait virtuel à partir du vêtement tricoté (50, 80, 90, 100) de la partie fortement rétractable, sur la base des forces qui agissent sur le vêtement de base ;
le module de placement initial (26) réalise sur le modèle de corps humain un placement ultérieur d'une partie qui est plus éloignée de la portion de partie de corps (51) que la partie tubulaire fortement rétractable (52, 55, 56, 83, 84, 85, 86) ou la ligne de revers (58, 98) ;
un module de jonction (28) qui fait joindre la partie placée ultérieurement aux parties déjà simulées de telle sorte que les parties déjà simulées soient fixes ; et
le module de simulation d'état stable (30) simule l'état de port des parties du vêtement tricoté qui sont jointes.

2. Procédé de simulation de port pour des vêtements tricotés, qui est un procédé mis en oeuvre sur un ordinateur pour simuler un état de port d'un vêtement tricoté virtuel désigné (50, 80, 90, 100), l'état de port étant la manière avec laquelle le vêtement se déforme sur un modèle de corps humain virtuel, comprenant les étapes suivantes :
détecter une partie tubulaire fortement rétractable (52, 55, 56, 83, 84, 85, 86) et une ligne de revers (58, 98) dans le vêtement tricoté (50, 80, 90, 100), la partie tubulaire fortement rétractable (52, 55, 56, 83, 84, 85, 86) étant une partie de côtes tubulaire, une partie tubulaire qui utilise du fil élastique, ou une partie tubulaire tricotée avec une taille de boucle plus petite qu'une autre partie ;
placer en premier sur le modèle de corps humain un vêtement de base qui est obtenu en retirant les parties détectées du vêtement tricoté (50, 80, 90, 100) et qui comprend des parties du vêtement tricoté allant d'une portion de corps (51) jusqu'à un contact avec la partie tubulaire fortement rétractable (52, 55, 56, 83, 84, 85, 86) ou la ligne de revers (58, 98) ;
simuler un état de port stable du vêtement de base, le vêtement de base résultant d'un retrait virtuel à partir du vêtement tricoté (50, 80, 90, 100) de la partie fortement rétractable, sur la base des forces qui agissent sur le vêtement de base ;
placer ensuite sur le modèle de corps humain une partie qui est plus éloignée de la portion de partie de corps (51) que la partie tubulaire fortement rétractable (52, 55, 56, 83, 84, 85, 86) ou la ligne de revers (58, 98) ;
joindre la partie placée ultérieurement aux parties déjà simulées de telle sorte que les parties déjà simulées soient fixes ;
simuler l'état de port des parties du vêtement tricoté qui sont jointes.
